# EUROPÄISCHE PATENTSCHRIFT

(11) **EP 1 897 473 B1**
(45) Veröffentlichungstag und Bekanntmachung des Hinweises auf die Patenterteilung: **22.04.2015**
(21) Anmeldenummer: 07017313.3
(22) Anmeldetag: 04.09.2007
(51) Int. Cl.: A47G 21/10, A47J 43/28

(54) **In Schließstellung verriegelbare Servierzange**
Lockable serving tongs in closed position
Pince verrouillable en position fermée

(30) Priorität: 05.09.2006 DE 102006041622
(43) Veröffentlichungstag der Anmeldung: 12.03.2008
(73) Patentinhaber: Metallwarenfabrik Marktoberdorf GmbH & Co. KG, 87616 Marktoberdorf (DE)
(72) Erfinder: Schneider, Paul, 87471 Durach (DE)
(74) Vertreter: Tiesmeyer, Johannes

(56) Entgegenhaltungen:
- US-A- 2 864 645
- US-A- 5 199 756
- US-A- 6 092 847
- US-A1- 2005 253 404

## Beschreibung

Die vorliegende Erfindung betrifft eine Servierzange, umfassend zwei um eine Schwenkachse relativ zueinander schwenkbar miteinander verbundene Zangenschenkel, welche an ihren vorderen Enden zum Ergreifen von Speisen ausgebildet sind, eine Feder, um die Zangenschenkel in eine Öffnungsstellung der Servierzange vorzuspannen, und einen Verriegelungsmechanismus, um die Zangenschenkel in einer Schließstellung der Servierzange gegen die Vorspannung der Feder zu verriegeln, wobei der erste Zangenschenkel ein Langloch umfasst, in dem ein Verriegelungsstift bewegbar geführt ist, und wobei an dem zweiten Zangenschenkel ein Verriegelungsnocken vorgesehen ist, der in der verriegelten Schließstellung der Servierzange den Verriegelungsstift berührt, wobei eine Verriegelung und eine Entriegelung der Zangenschenkel durch einfaches Schwenken der Servierzange in eine im Wesentlichen senkrechte Stellung erfolgt bei einander angenäherten Zangenschenkeln.

Eine derartige Servierzange, die beispielsweise zum Servieren von Salat oder beim Grillen von Fleisch benutzt werden kann, ist beispielsweise aus der US 2,864,645 bekannt. Diese bekannte Servierzange hat den Vorteil, dass sie einfach mittels einer Handbewegung in ihrer Schließstellung verriegelt und wieder entriegelt werden kann, indem die Servierzange entweder zum Verriegeln so geschwenkt wird, dass die vorderen Enden der Zangenschenkel nach oben weisen, oder zum Entriegeln so geschwenkt wird, dass die vorderen Enden der Zangenschenkel nach unten weisen, während gleichzeitig die Zangenschenkel leicht zusammengedrückt werden.

Allerdings ist bei dieser bekannten Servierzange der Verriegelungsmechanismus, umfassend den Verriegelungsstift, das Langloch und den Verriegelungsnocken, von den vorderen Enden der Zangenschenkel aus gesehen vor der Schwenkachse angeordnet, so dass bei Gebrauch beispielsweise Salatblätter, Spritzer von Soßen oder Salatdressing o. Ä. den Verriegelungsmechanismus verschmutzen kann, so dass einerseits der Verriegelungsmechanismus umständlich gereinigt werden muss und andererseits auch die Wirkung des Verriegelungsmechanismus beeinträchtigt sein kann, wenn beispielsweise der Verriegelungsstift aufgrund einer Verschmutzung nicht mehr frei im Langloch gleitet.

Es ist daher Aufgabe der vorliegenden Erfindung, eine gattungsgemäße Servierzange bereitzustellen, deren Entriegelungs-Nerriegelungsmechanismus auch bei dauerhaftem bestimmungsgemäßem Einsatz gleichbleibend zuverlässig funktioniert.

Zur Lösung dieser Aufgabe stellt die vorliegende Erfindung eine Servierzange bereit, umfassend zwei um eine Schwenkachse relativ zueinander schwenkbar miteinander verbundene Zangenschenkel, welche an ihren vorderen Enden zum Ergreifen von Speisen ausgebildet sind, eine Feder, um die Zangenschenkel in eine Öffnungsstellung der Servierzange vorzuspannen, und einen Verriegelungsmechanismus, um die Zangenschenkel in einer Schließstellung der Servierzange gegen die Vorspannung der Feder zu verriegeln, wobei der erste Zangenschenkel ein Langloch umfasst, in dem ein Verriegelungsstift bewegbar geführt ist, und wobei an dem zweiten Zangenschenkel ein Verriegelungsnocken vorgesehen ist, der in der verriegelten Schließstellung der Servierzange den Verriegelungsstift berührt. Eine Verriegelung und eine Entriegelung der Zangenschenkel erfolgt hierbei durch einfaches Schwenken der Servierzange in eine im Wesentlichen senkrechte Stellung bei einander angenäherten Zangenschenkeln. Die Servierzange der vorliegenden Erfindung ist dadurch gekennzeichnet, dass der Verriegelungsmechanismus von einem vorderen Ende der Zangenschenkel aus betrachtet hinter der Schwenkachse angeordnet ist.

Durch diese Anordnung des Verriegelungsmechanismus hinter der Schwenkachse der Zangenschenkel kommt der Verriegelungsmechanismus bei der bestimmungsgemäßen Handhabung der Zange normalerweise nicht mit Speisen in Berührung, so dass einerseits eine aufwändige Reinigung des Verriegelungsmechanismus nach jeder Benutzung unterbleiben kann und andererseits sichergestellt ist, dass der Verriegelungsmechanismus auch dann zuverlässig funktioniert, wenn die Servierzange beispielsweise durch Soßenspritzer o. Ä. im vorderen Greifbereich zwischen den Zangenschenkeln stark verschmutzt wird.

Vorzugsweise erstreckt sich das Langloch im Wesentlichen parallel zu einer Längsachse des ersten Zangenschenkels, so dass die Verriegelung bzw. die Entriegelung der Zange zuverlässig durch Schwenken in eine im Wesentlichen senkrechte Stellung erfolgen kann.

Vorzugsweise entspricht die Verriegelungsstellung des Verriegelungsstifts einer Position am hinteren Ende des Langlochs, während die Freigabestellung des Verriegelungsstifts einer Position am vorderen Ende des Langlochs entspricht. Hierdurch ist sichergestellt, dass bei Gebrauch der Servierzange zum Ergreifen von Speisen, wobei diese üblicherweise mit ihren vorderen Enden nach schräg unten gehalten wird, die Servierzange nicht versehentlich verriegelt werden kann, auch wenn sie zum Festhalten der ergriffenen Speisen in die Schließstellung gedrückt wird.

Bei einer besondes bevorzugten Ausführungsform der vorliegenden Erfindung werden das Langloch und der Verriegelungsstift von Seitenteilen des zweiten Zangenschenkels in einer Richtung parallel zur Schwenkachse vollständig überdeckt. Hierdurch wird der Verriegelungsmechanismus in einer Seitenansicht der Servierzange vollkommen "unsichtbar", so dass das äußere Erscheinungsbild der Servierzange nicht durch das Vorsehen des Verriegelungsmechanismus beeinträchtigt wird.

Weitere Merkmale, Eigenschaften und Vorteile der Erfindung werden aus der beigefügten detaillierten Beschreibung einer bevorzugten Ausführungsform zusammen mit den angehängten Zeichnungen ersichtlich, wobei:
- Fig. 1: eine Teil-Querschnittsansicht (siehe den Schnittverlauf I-I in Fig. 5) einer erfindungsgemäßen Servierzange in ihrer Schließstellung zeigt;
- Fig. 2: eine Querschnittsansicht (siehe den Schnittverlauf II-II in Fig. 6) der Servierzange aus Fig. 1 in ihrer Öffnungsstellung zeigt;
- Fig. 3: eine Seitenansicht der Servierzange in ihrer Schließstellung ist;
- Fig. 4: eine Querschnittsansicht entlang Linie IV-IV aus Fig. 3 zeigt;
- Fig. 5: eine Draufsicht auf die Servierzange von Fig. 1 ist; und
- Fig. 6: eine Draufsicht auf die geöffnete Servierzange von Fig. 2 ist.

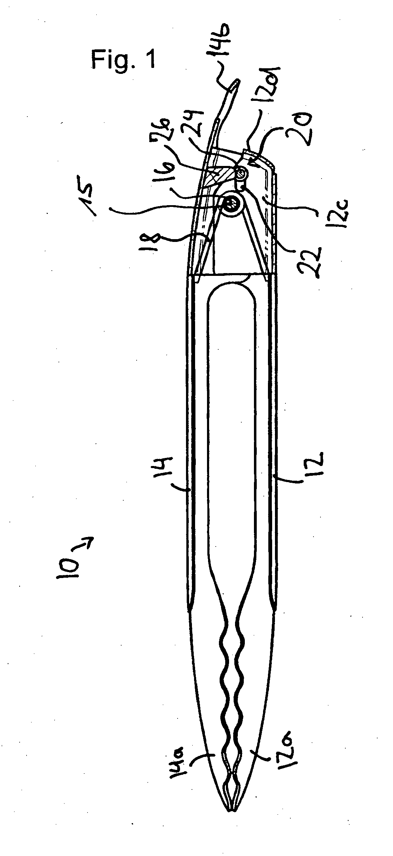

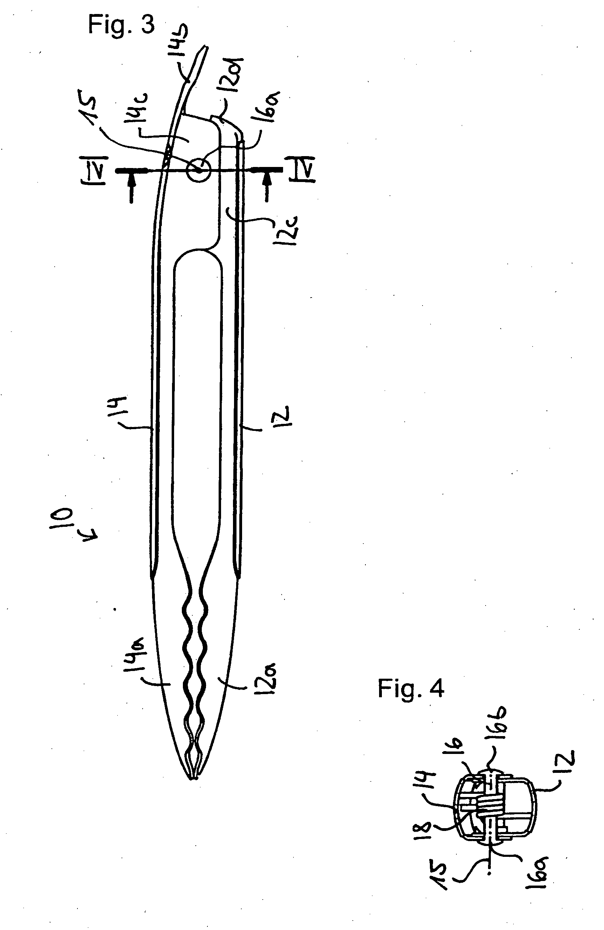

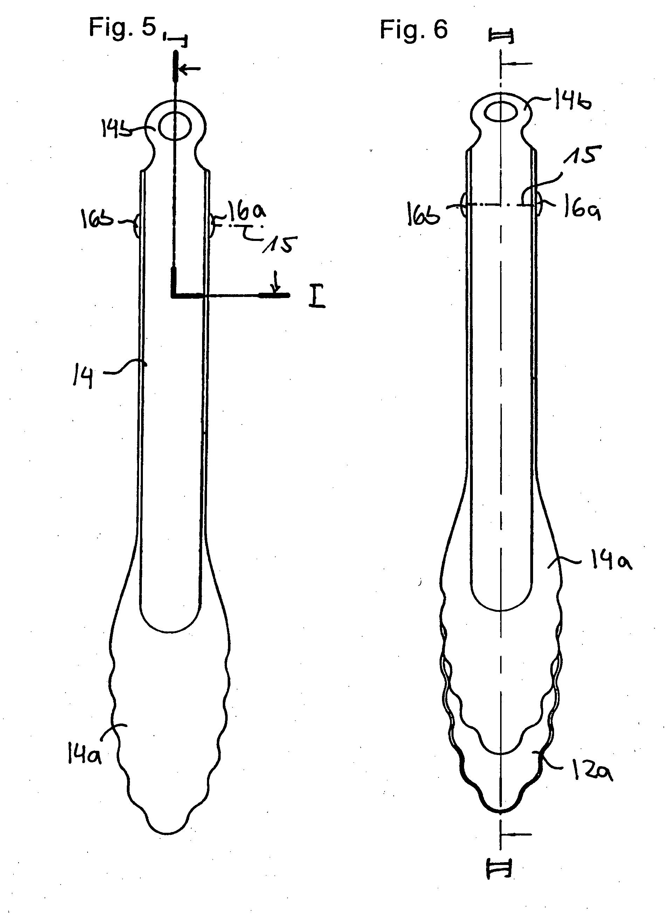

Eine Servierzange 10 umfasst einen ersten Zangenschenkel 12 und einen zweiten Zangenschenkel 14, welche mittels einer Schwenkachse 15 schwenkbar miteinander verbunden sind. Hierbei ist jeweils das vordere Ende 12a, 14a des ersten und zweiten Zangenschenkels 12, 14 zum Ergreifen von Speisen ausgebildet, wobei außer der in den Fig. 1 bis 6 dargestellten, eichenblattartigen Greiferform jede bei Servierzangen übliche Gestaltungsform, beispielsweise als Löffel, Gabel, Spatel oder dgl., vorgesehen sein kann. Am hinteren Ende des zweiten Zangenschenkels 14 kann ein verlängerten Abschnitt 14b mit einer Öse oder dgl. vorgesehen sein, mittels derer die Servierzange bei Nichtgebrauch aufgehängt werden kann. Die Schwenkachse 15 ist separat von den beiden Zangenschenkeln 12, 14 gebildet, verläuft jeweils durch ein Durchgangsloch (nicht dargestellt) in den Seitenteilen 12c, 14c der beiden Zangenschenkel 12, 14 und wird durch einen Stift 16 definiert, der durch zwei Nietköpfe 16a, 16b an den Zangenschenkeln 12, 14 gegen ein seitliches Herausrutschen fixiert ist.

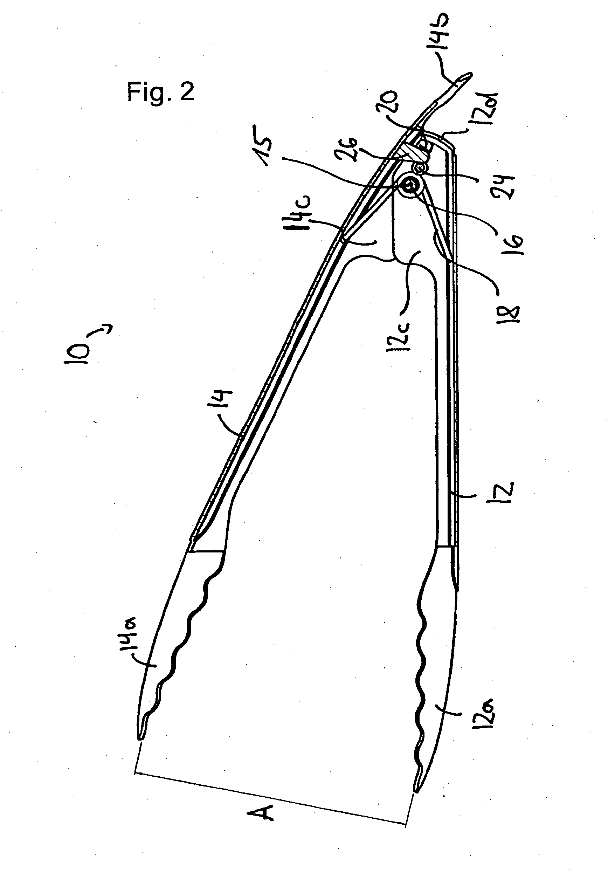

Der hintere Bereich 12d des Seitenteils 12c des ersten Zangenschenkels 12 ist, wie insbesondere aus Fig. 2 ersichtlich, derart ausgebildet, dass er in der vollständig geöffneten Stellung der Servierzange 10 die Öffnung zwischen den vorderen Enden 12a, 14a der beiden Zangenschenkel 12, 14 auf eine maximale Öffnungsweite A begrenzt.

Um den Schwenkachsenstift 16 ist eine Schrauben-Spreizfeder 18 angeordnet, die die Zangenschenkel 12, 14 in die in Fig. 2 dargestellte Öffnungsstellung der Servierzange 10 vorspannt. Zwischen den beiden Seitenteilen 14c des zweiten Zangenschenkels 14 ist an der von den vorderen Enden 12a, 14a der Zangenschenkel 12, 14 abgewandten Seite der Schwenkachse 15 ein allgemein mit 20 bezeichneter Verriegelungsmechanismus angeordnet. Der Verriegelungsmechanismus 20 umfasst ein im Seitenteil 12c des ersten Zangenschenkels 12 gebildetes Langloch 22, das parallel zu einer Längsachse des ersten Zangenschenkels 12 verläuft. Im Langloch 22 ist ein Verriegelungsstift 24 bewegbar geführt. Weiterhin ist an der dem ersten Zangenschenkel 12 zugewandten Seite des zweiten Zangenschenkels 14 ein Verriegelungsnocken 26 vorgesehen, der den Verriegelungsstift 24 in der in Fig. 1 dargestellten Verriegelungsstellung des Verriegelungsmechanismus 20 berührt, so dass in dieser Verriegelungsstellung ein Öffnen der Servierzange 10 dadurch verhindert wird, dass sich der Verriegelungsnocken 26 auf dem Verriegelungsstift 24 abstützt, wobei der Verriegelungsstift 24 im Beispielsfall reibschlüssig in seiner Verriegelungsstellung am hinteren Ende des Langlochs 22 gehalten wird.

Wird nun die Servierzange 10 in der in Fig. 1 gezeigten Verriegelungsstellung von einem Benutzer ergriffen, der die beiden Zangenschenkel 12, 14 leicht zusammendrückt, wird der Verriegelungsnocken 26 vom Verriegelungsstift 24 abgehoben. Wenn dann die Servierzange 10 in eine Position geschwenkt wird, in der sich die vorderen Enden 12a, 14a unterhalb der Schwenkachse 15 befinden, gleitet der Verriegelungsstift 24 unter der Wirkung der Schwerkraft im Langloch 22 nach vorne in die in Fig. 2 dargestellte Freigabeposition, in der die Zangenschenkel 12, 14 frei relativ zueinander verschwenkbar sind und die Servierzange 10 kann daher durch die Feder 18 in die Öffnungsstellung gedrückt werden.

Um die Servierzange 10 nach Gebrauch wieder in der Schließstellung zu verriegeln, drückt der Benutzer die beiden Zangenschenkel 12, 14 mit einer Hand zusammen und schwenkt die Servierzange 10 derart, dass die vorderen Enden 12a, 14a der Zangenschenkel 12, 14 sich oberhalb der Schwenkachse 15 befinden. Dann kann der Verriegelungsstift 24 im Langloch 22 unter der Wirkung der Schwerkraft wieder in die in Fig. 1 dargestellte hintere Verriegelungsposition gleiten, in der sich der Verriegelungsnocken 26 auf dem Verriegelungsstift 24 abstützt und somit ein Öffnen der Servierzange 10 verhindert.

## Patentansprüche

1. Servierzange (10), umfassend:
zwei um eine Schwenkachse (15) relativ zueinander schwenkbar miteinander verbundene Zangenschenkel (12, 14), welche an ihren vorderen Enden (12a, 14a) zum Ergreifen von Speisen ausgebildet sind,
eine Feder (18), um die Zangenschenkel (12, 14) in eine Öffnungsstellung der Servierzange (10) vorzuspannen, und
einen Verriegelungsmechanismus (20), um die Zangenschenkel (12, 14) in einer Schließstellung der Servierzange (10) gegen die Vorspannung der Feder (18) zu verriegeln, wobei der erste Zangenschenkel (12) ein Langloch (22) umfasst, in dem ein Verriegelungsstift (24) bewegbar geführt ist, und wobei an dem zweiten Zangenschenkel (14) ein Verriegelungsnocken (26) vorgesehen ist, der in der verriegelten Schließstellung der Servierzange (10) den Verriegelungsstift (24) berührt,
wobei eine Verriegelung und eine Entriegelung der Zangenschenkel (12, 14) durch einfaches Schwenken der Servierzange (10) in eine im Wesentlichen senkrechte Stellung bei einander angenäherten Zangenschenkeln erfolgt,
**dadurch gekennzeichnet, dass** der Verriegelungsmechanismus (20) von einem vorderen Ende (12a, 14a) der Zangenschenkel (12, 14) aus betrachtet hinter der Schwenkachse (15) angeordnet ist.

2. Servierzange (10) nach Anspruch 1, **dadurch gekennzeichnet, dass** das Langloch (22) sich im Wesentlichen parallel zu einer Längsachse des ersten Zangenschenkels (12) erstreckt.

3. Servierzange (10) nach Anspruch 1 oder 2, **dadurch gekennzeichnet, dass** die Verriegelungsstellung des Verriegelungsstifts (24) einer Position am hinteren Ende des Langlochs (22) entspricht, während die Freigabestellung des Verriegelungsstifts (24) einer Position am vorderen Ende des Langlochs (22) entspricht.

4. Servierzange (10) nach einem der Ansprüche 1 bis 3, **dadurch gekennzeichnet, dass** das Langloch (22) und der Verriegelungsstift (24) von Seitenteilen (14c) des zweiten Zangenschenkels (14) in einer Richtung parallel zur Schwenkachse (15) vollständig überdeckt werden.

## Claims

1. Serving tongs (10) comprising:
two tong limbs (12, 14) connected with each other rotatably relative to one another around a pivoting axis (15), the tong limbs being adapted at their front ends (12a, 14a) for seizing food,
a spring (18) for biasing the tong limbs (12, 14) into an opening position of the serving tongs (10), and
a locking mechanism (20) for locking the tong limbs (12, 14) in a closing position of the serving tongs (10) against the bias of the spring (18), the first tong limb (12) comprising an elongated hole (22), in which a locking pin (24) is moveably guided, and a locking cam (26), which in the locked closed position of the serving tongs (10) contacts the locking pin (24), being provided at the second tong limb (14),
wherein locking and releasing the tong limbs (12, 14) is realized by simply pivoting the serving tongs (10) in a substantially vertical position with the tong limbs brought close together,
**characterized in** the locking mechanism (20) being arranged behind the pivoting axis (15) as seen from a front end (12a, 14a) of the tong limbs (12, 14).

2. Serving tongs (10) according to claim 1, **characterized in** the longitudinal hole (22) extending substantially parallel to a longitudinal axis of the first tong limb (12).

3. Serving tongs (10) according to claim 1 or 2, **characterized in** the locking position of the locking pin (24) corresponding to a position at the rear end of the longitudinal hole (22), and the release position of the locking pin (24) corresponding to a position at a front end of the longitudinal hole (22).

4. Serving tongs (10) according to one of claims 1 to 3, **characterized in** the longitudinal hole (22) and the locking pin (24) being completely covered by side parts (14c) of the second tong limb (14) in a direction parallel to the pivot axis (15).

## Revendications

1. Pince de service (10), comprenant:
deux branches de pince (12, 14) connectées entre elles de façon pivotante l'une à l'autre autour d'un axe de pivotement (15), les branches de pince étant adaptées à leurs extrémités avant (12a, 14a) pour saisir des aliments,
un ressort (18) pour pousser les branches de pince (12, 14) vers une position d'ouverture de la pince de service (10), et
un mécanisme de verrouillage (20) pour verrouiller les branches de pince (12, 14) dans une position de fermeture de la pince de service (10) contre la précontrainte du ressort (18), la première branche de pince (12) comprenant une ouverture allongée (22), dans laquelle une goupille de verrouillage (24) est guidée de façon mobile, et une came de verrouillage (26) étant prévue à la deuxième branche de pince (14) touchant la goupille de verrouillage (24) dans la position de fermeture verrouillée de la pince de service (10),
un verrouillage et un déverrouillage des tranches de pince (12, 14) étant réalisés en simplement pivotant la pince de service (10) dans une position essentiellement verticale avec les tranches de pince rapprochées,
**caractérisée par** le mécanisme de verrouillage (20) étant arrangé derrière l'axe de pivotement, vu d'une extrémité avant (12a, 14a) des tranches de pince (12, 14).

2. Pince de service (10) selon la revendication 1, **caractérisée par** l'ouverture allongée (22) s'étendant essentiellement parallèlement à un axe longitudinal de la première tranche de pince (12).

3. Pince de service (10) selon les revendications 1 ou 2, **caractérisée par** la position de verrouillage de la goupille de verrouillage (24) correspondant à une position à l'extrémité arrière de l'ouverture allongée (22), tandis que la position de déverrouillage de la goupille de verrouillage (24) correspond à une position à l'extrémité avant de l'ouverture allongée (22).

4. Pince de service (10) selon une des revendications 1 à 3, **caractérisée par** l'ouverture allongée (22) et la goupille de verrouillage (24) étant complètement couvertes par des parties latérales (14c) de la deuxième branche de pince (14) dans une direction parallèle à l'axe de pivotement (15).
